(19) Europäisches Patentamt
European Patent Office
Office européen des brevets

(11) **EP 3 955 024 A2**

(12) **EUROPEAN PATENT APPLICATION**

(43) Date of publication:
**16.02.2022 Bulletin 2022/07**

(21) Application number: **21205412.6**

(22) Date of filing: **28.10.2021**

(51) International Patent Classification (IPC):
**G01S 17/00** (2020.01)    **G01S 7/48** (2006.01)
**G01S 17/42** (2006.01)    **G01S 17/89** (2020.01)

(52) Cooperative Patent Classification (CPC):
**G01S 7/4802; G01S 17/006; G01S 17/42; G01S 17/89**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.12.2020 CN 202011626016**

(71) Applicant: **BEIJING BAIDU NETCOM SCIENCE TECHNOLOGY CO., LTD.**
**No.10 Shangdi 10th Street**
**Haidian District**
**Beijing 100085 (CN)**

(72) Inventors:
• **XIE, Qingqing**
  **BEIJING (CN)**
• **ZHANG, Yanfu**
  **BEIJING (CN)**
• **ZHANG, Jiali**
  **BEIJING (CN)**
• **YUAN, Meng**
  **BEIJING (CN)**

(74) Representative: **Bittner, Bernhard**
**Hannke Bittner & Partner**
**Patent- und Rechtsanwälte mbB**
**Prüfeninger Strasse 1**
**93049 Regensburg (DE)**

(54) **LIDAR MAP-BASED LOOP DETECTION METHOD AND APPARATUS, MEDIUM, PROGRAM PRODUCT**

(57)    A lidar map-based loop detection method and apparatus, a storage medium, and a computer program product are disclosed, which are related to a field of intelligent transportation and a technical field of automatic driving. The specific implementation includes: acquiring an eigenvector of each grid in each sub-map of N sub-maps of the lidar map; determining a target eigenvector of each grid in each sub-map of the N sub-maps according to the eigenvector of each grid in each sub-map of the N sub-maps; constructing histograms of the N sub-maps according to the target eigenvector of each grid in each sub-map of the N sub-maps; and determining that a loop relation exists between two target sub-maps in the N sub-maps, in case that a similarity of histograms of the two target sub-maps is greater than a preset threshold value.

acquiring an eigenvector of each grid in each sub-map of N sub-maps of the lidar map, wherein the eigenvector is used for representing a characteristic direction of the grid, and N is an integer greater than or equal to 2 — S11

determining a target eigenvector of each grid in each sub-map of the N sub-maps according to the eigenvector of each grid in each sub-map of the N sub-maps — S12

constructing histograms of the N sub-maps according to the target eigenvector of each grid in each sub-map of the N sub-maps — S13

determining that a loop relation exists between two target sub-maps in the N sub-maps, in case that a similarity of histograms of the two target sub-maps is greater than a preset threshold value — S14

**FIG. 1**

EP 3 955 024 A2

**Description**

**TECHNICAL FIELD**

The disclosure relates to a field of intelligent transportation, in particular, to a field of automatic driving.

**BACKGROUND**

In the construction process of a positioning map, due to the limited technology level, accumulated errors often occur, and with the increase of the size of map construction, errors will become larger and larger. One way to solve this problem is to select a loop path for data acquisition in the process of drawing. Therefore, the accuracy and timeliness of loop detection are critical. In the related technology, the possibility of loop existence is usually determined in advance according to image or track data, and the accuracy and timeliness of the detection mode are poor.

**SUMMARY**

According to the present disclosure, it is provided a lidar map-based loop detection method and apparatus, an electronic device, a storage medium, and a computer program product.

According to an aspect of the present disclosure, it is provided a lidar map-based loop detection method, including:

acquiring an eigenvector of each grid in each sub-map of N sub-maps of the lidar map, wherein the eigenvector is used for representing a characteristic direction of the grid, and N is an integer greater than or equal to 2;

determining a target eigenvector of each grid in each sub-map of the N sub-maps according to the eigenvector of each grid in each sub-map of the N sub-maps;

constructing histograms of the N sub-maps according to the target eigenvector of each grid in each sub-map of the N sub-maps; and

determining that a loop relation exists between two target sub-maps in the N sub-maps, in case that a similarity of histograms of the two target sub-maps is greater than a preset threshold value.

According to another aspect of the present disclosure, it is provided a lidar map-based loop detection apparatus, including:

an acquisition unit for acquiring an eigenvector of each grid in each sub-map of N sub-maps of the lidar map, wherein the eigenvector is used for representing a characteristic direction of the grid, and N is an integer greater than or equal to 2;

a first determination unit for determining a target eigenvector of each grid in each sub-map of the N sub-maps according to the eigenvector of each grid in each sub-map of the N sub-maps;

a construction unit for constructing histograms of the N sub-maps according to the target eigenvector of each grid in each sub-map of the N sub-maps; and

a loop determination unit for determining that a loop relation exists between two target sub-maps in the N sub-maps, in case that a similarity of histograms of the two target sub-maps is greater than a preset threshold value.

According to another aspect of the present disclosure, it is provided an electronic device, including:

at least one processor; and

a memory communicatively connected to the at least one processor, wherein

the memory stores instructions executable by the at least one processor, and the instructions, when executed by the at least one processor, enable the at least one processor to perform a method of any one of the embodiments of the present disclosure.

According to another aspect of the present disclosure, it is provided a non-transitory computer-readable storage medium storing computer instructions, wherein the computer instructions, when executed by a computer, cause the computer to perform a method in any one of the embodiments of the present disclosure.

According to another aspect of the present disclosure, it is provided a computer program product including instructions which, when the program is executed by a computer, cause the computer to perform the method in any one of the embodiments of the present disclosure.

According to the technical scheme of the present disclosure, the accuracy and effectiveness of loop detection can be improved.

It is to be understood that the content described in this section is not intended to identify the key or critical features of embodiments of the present disclosure, nor is it intended to limit the scope of the disclosure. Other features of the present disclosure will become readily apparent from the following description.

**BRIEF DESCRIPTION OF THE DRAWINGS**

The accompanying drawings are included to provide a better understanding of the scheme and are not to be construed as limiting the present disclosure. In the drawings:

FIG. 1 is a schematic diagram I of a lidar map-based loop detection method according to an embodiment of the present disclosure;

FIG. 2 is a schematic diagram II of a lidar map-based loop detection method according to an embodiment of the present disclosure;

FIG. 3 is a schematic diagram III of a lidar map-based loop detection method according to an embodiment of the present disclosure;

FIG. 4 is a schematic diagram IV of a lidar map-based loop detection method according to an embodiment of the present disclosure;

FIG. 5 is a schematic diagram I of a lidar map-based loop detection apparatus according to an embodiment of the present disclosure;

FIG. 6 is a schematic diagram II of a lidar map-based loop detection apparatus according to an embodiment of the present disclosure;

FIG. 7 is a schematic diagram III of a lidar map-based loop detection apparatus according to an embodiment of the present disclosure; and

FIG. 8 is a block diagram of electronic device for implementing a lidar map-based loop detection method of the present disclosure.

## DETAILED DESCRIPTION

The following describes exemplary embodiments of the present disclosure with reference to the accompanying drawings, which includes various details of embodiments of the present disclosure to facilitate understanding and should be considered as merely exemplary. Accordingly, one of ordinary skilled in the art appreciates that various changes and modifications can be made to the embodiments described herein without departing from the scope and spirit of the present disclosure. Similarly, descriptions of well-known functions and structures are omitted from the following description for clarity and conciseness.

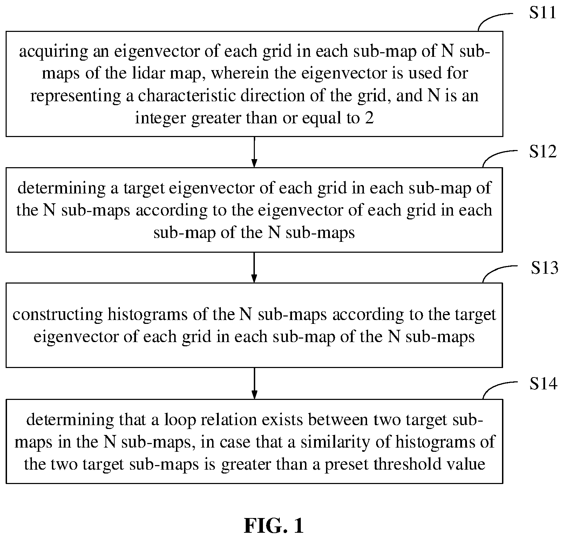

FIG. 1 is a schematic diagram of a lidar map-based loop detection method according to an embodiment of the present disclosure. The method may be applied to an electronic device including, but not limited to, a stationary device and/or a mobile device, e.g., a stationary device including, but not limited to, a server, which may be a cloud server or a general server. For example, mobile devices include, but are not limited to: one or more of a cell phone or a tablet computer. As shown in FIG. 1, the method includes:

S11: acquiring an eigenvector of each grid in each sub-map of N sub-maps of the lidar map, wherein the eigenvector is used for representing a characteristic direction of the grid, and N is an integer greater than or equal to 2;

S12: determining a target eigenvector of each grid in each sub-map of the N sub-maps according to the eigenvector of each grid in each sub-map of the N sub-maps;

S13: constructing histograms of the N sub-maps according to the target eigenvector of each grid in each sub-map of the N sub-maps; and

S14: determining that a loop relation exists between two target sub-maps in the N sub-maps, in case that a similarity of histograms of the two target sub-maps is greater than a preset threshold value.

The lidar map is a map drawn according to lidar data. The present disclosure does not limit how to obtain a lidar map.

In S 11, the whole lidar map is divided into N sub-maps according to a preset time period, wherein the area in each sub-map is equal. It should be noted that the preset time period may be set or adjusted according to design requirements such as accuracy requirements or speed requirements.

In S11, the whole lidar map can also be divided into N sub-maps according to the preset driving mileage, and the area in each sub-map is equal. It should be noted that the preset mileage period may be set or adjusted according to design requirements such as accuracy requirements or speed requirements.

The grid is a regular mesh into which sub-maps are divided. Each sub-map area is divided into an equal number of grids, the area of each grid being equal. For each sub-map, the concept of a grid is introduced. For example, for a sub-map area ranging 10m* 10m* 10m, a series of small grids of 0.5m*0.5m*0.5m can be divided therefrom, in which case the sub-map consists of 20*20*20=8000 small grids.

The target eigenvector in S12 is an eigenvector obtained according to the eigenvector in S11, and the target eigenvector makes the characteristic of a sub-map have rotation invariance.

The target sub-map is an optional sub-map among N sub-maps.

The preset threshold value can be set or adjusted according to design requirements such as accuracy requirements or speed requirements.

In this way, according to the scheme of the present disclosure, a target eigenvector of each grid in each sub-map is determined according to the obtained eigenvector of each grid in each sub-map of a lidar map; histograms of the N sub-maps are constructed according to the target eigenvector of each grid in each sub-map; it is determined that a loop relation exists between two target sub-maps, in case that a similarity of histograms of the two target sub-maps is greater than a preset threshold value. Therefore, the characteristics of laser data are extracted from a lidar sub-map, and the lidar data characteristics are used for loop detection. Compared with a detection mode of loop detection by utilizing track, a loop detection is carried out from the lidar data, the robustness is stronger, the detection success rate is higher, the accuracy and timeliness of a loop detection are improved, and the reliability of loop detection results is greatly improved.

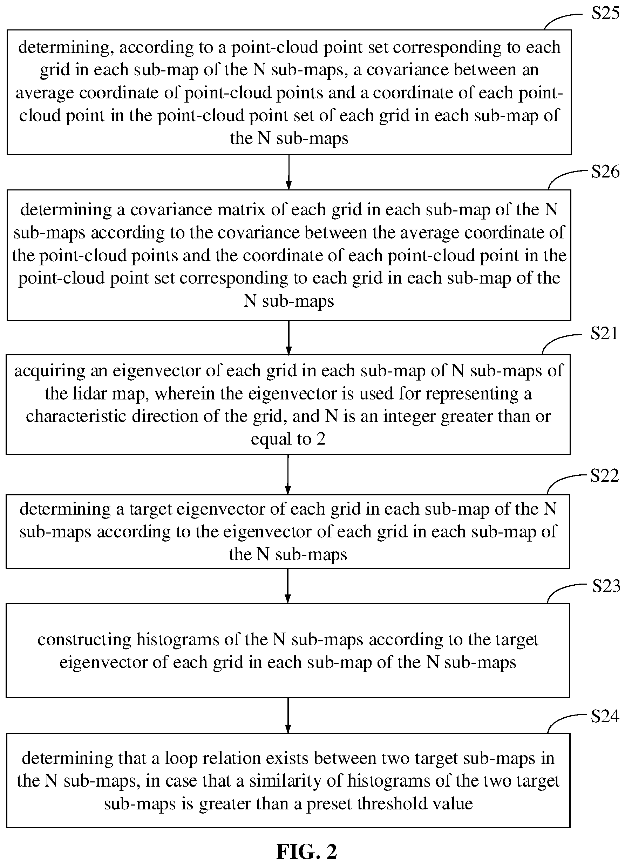

In an embodiment of the present disclosure, on the basis of implementing any of the above-mentioned methods, as shown in FIG. 2, in addition to steps S21 to S24, which are identical or similar to the steps S11 to S14, the method may further include:

S25: determining, according to a point-cloud point set corresponding to each grid in each sub-map of the N sub-maps, a covariance between an average coordinate of point-cloud points and a coordinate of each point-cloud point in the point-cloud point set of each grid in each sub-map of the N sub-maps; and

S26: determining a covariance matrix of each grid in each sub-map of the N sub-maps according to the covariance between the average coordinate of the point-cloud points and the coordinate of each point-cloud point in the point-cloud point set corresponding to each grid in each sub-map of the N sub-maps.

The point-cloud point set of the grid is the set of all point-cloud points located within the grid.

For each sub-map, the average coordinates of point-cloud points in a point-cloud point set and the covariance of the coordinates of each point-cloud point are determined according to the point-cloud point set in each grid in the sub-map. Further, a covariance matrix of each grid is determined according to the average coordinates of point-cloud points in a point-cloud point set and the covariance of coordinates of each point-cloud point.

Through the above embodiment, the calculation condition can be constructed for subsequently solving the eigenvector of a grid, so that the characteristics of laser data can be extracted from a lidar sub-map, the efficiency of extracting the characteristics of the laser data is improved, and the timeliness of loop detection by utilizing the characteristics of the lidar data is improved.

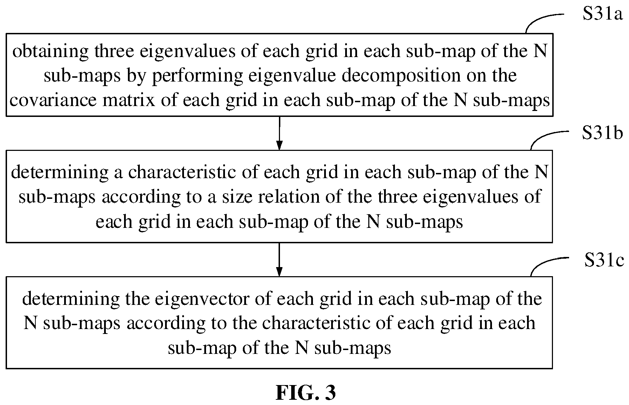

In an embodiment of the present disclosure, on the basis of implementing any of the above-mentioned methods, as shown in FIG. 3, S31, which is identical or similar to S11, may include:

S31a: obtaining three eigenvalues of each grid in each sub-map of the N sub-maps by performing eigenvalue decomposition on the covariance matrix of each grid in each sub-map of the N sub-maps;

S31b: determining a characteristic of each grid in each sub-map of the N sub-maps according to a size relation of the three eigenvalues of each grid in each sub-map of the N sub-maps; and

S31c: determining the eigenvector of each grid in each sub-map of the N sub-maps according to the characteristic of each grid in each sub-map of the N sub-maps.

For each sub-map, the eigenvalue decomposition is carried out on the covariance matrix of each grid in the sub-map to obtain three eigenvalues of each grid; the characteristic of each grid is determined according to the size relation of the three eigenvalues of each grid; and the eigenvector of each grid is determined according to the characteristic of each grid.

The characteristics of a grid include line characteristics, surface characteristics, and non-obvious characteristics, and the point characteristic is used for representing that point-cloud points in a grid are linear. The surface characteristic is used for representing that the point-cloud points in a grid are plane-shaped. The non-obvious characteristic indicates that the point-cloud points in a grid are neither point-shaped nor plane-shaped.

In some implementations, the characteristic of each grid is determined according to the size relation of three eigenvalues of each grid, including: arranging three eigenvalues of each grid from large to small, and respectively recording the three eigenvalues as a first eigenvalue, a second eigenvalue and a third eigenvalue. If the first eigenvalue is M times of the second eigenvalue, it is determined that the characteristic of the grid is linear, and representing point-cloud points in the grid to be linear. If the first eigenvalue and the second eigenvalue are in the same order of magnitude and far larger than the third eigenvalue, it is determined that the characteristic of the grid is a planar characteristic. Further, if the first eigenvalue, the second eigenvalue and the third eigenvalue are all in the same order of magnitude and the difference value between the first eigenvalue and the second eigenvalue and the difference value between the second eigenvalue and the third eigenvalue are smaller than a preset eigenvalue threshold value, it is determined that the grid characteristic is non-obvious characteristic.

In some implementations, a eigenvector for each grid in a sub-map is determined based on characteristic of each grid, including: if the characteristic of a grid is a linear characteristic, it is determined that the eigenvector of the grid is a direction vector of a first eigenvalue; if the characteristic of a grid is a planar characteristic, it is determined that the eigenvector of the grid is a direction vector of the third eigenvalue; further, if the characteristic of a grid is non-obvious characteristic, it is determined that the eigenvector of the grid does not need to be determined, and the grid does not participate in subsequent loop detection.

By way of example, three eigenvalues of a covariance matrix, denoted el, e2, and e3, are arranged from large to small. According to related mathematical principles, if e1 is significantly larger than e2, for example, e1 is 10 times of e2, the characteristic of the grid is marked as a line, representing that point-cloud points located in the grid are basically linear, where the characteristic direction of the grid is e1 direction. If e1 and e2 are basically in the same order of magnitude and are significantly larger than e3, for example, e2 is 10 times of e3, the characteristic of the grid is marked as a surface, representing that point-cloud points located in the grid are basically planar, and the characteristic direction of the grid is the e3 direction. If e1, e2, e3 are all in the same order of magnitude without significant size differences, then the grid has no significant characteristics.

Through the embodiment, the eigenvector of a grid can be obtained based on a covariance matrix, so that the characteristic of laser data can be extracted from a lidar sub-map, the extraction efficiency of the characteristic of the laser data is improved, and the timeliness of loop detection by utilizing the characteristic of the lidar data is improved.

In some implementations, before determining the eigenvector of each grid in each sub-map of the N sub-maps according to the characteristic of each grid in each sub-map of the N sub-maps, the method further includes: selecting, respectively, a target grid participating in loop detection in each sub-map of the N sub-maps according to the characteristic of each grid in each sub-map of the N sub-maps; and determining the eigenvector of each grid in each sub-map of the N sub-maps according to the characteristic of each grid in each sub-map of the N sub-maps further includes: determining an eigenvector of each target grid in each sub-map of the N sub-maps according to a characteristic of each target grid in each sub-map of the N sub-maps.

The target grid is a grid that needs to participate in the loop detection calculation.

For each sub-map, before determining the eigenvector of each grid according to the characteristic of each grid, the method further includes: selecting a target grid participating in loop detection in the sub-map according to the characteristic of each grid in the sub-map; and determining the eigenvector of the target grid in the sub-map according to the characteristic of the target grid in the sub-map.

According to the above implementation, before the eigenvector of each grid in the sub-map is determined, the target grid participating in loop detection is determined, that is, the grids without obvious characteristics in the sub-map are ignored in the subsequent calculation process, the amount can be calculated, and the efficiency of loop detection by utilizing the lidar data characteristics is further improved.

Of course, it should be noted that the manner in which the eigenvectors of the grids in the N sub-maps of the lidar map are obtained is not limited to the above-listed manner, and that the manner in which the eigenvectors of the grids can be obtained from the sub-maps can be performed, for example, by performing eigenvector calculation on the grids in the sub-maps according to a depth learning manner.

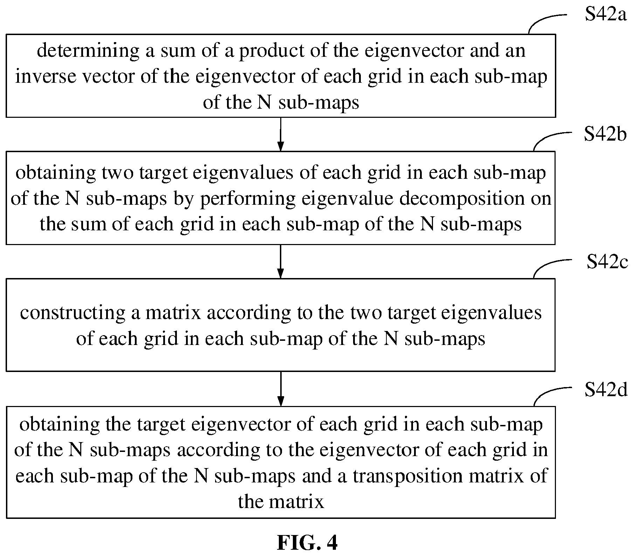

In order to make a sub-map rotate arbitrarily and also detect a loop, in an embodiment of the present disclosure, on the basis of implementing any of the above-mentioned methods, as shown in FIG. 4, S42, which is identical or similar to S12, may include:

S42a: determining a sum of a product of the eigenvector and an inverse vector of the eigenvector of each grid in each sub-map of the N sub-maps;
S42b: obtaining two target eigenvalues of each grid in each sub-map of the N sub-maps by performing eigenvalue decomposition on the sum of each grid in each sub-map of the N sub-maps;

S42c: constructing a matrix according to the two target eigenvalues of each grid in each sub-map of the N sub-maps, wherein
a first column of the matrix is an eigenvector corresponding to a maximum target eigenvalue, a second column is an eigenvector corresponding to a second maximum target eigenvalue, a third column is a cross multiplication of the first column and the second column, and any two columns of the matrix are orthogonal, which meets a characteristic of a rotation matrix; and
S42d: obtaining the target eigenvector of each grid in each sub-map of the N sub-maps according to the eigenvector of each grid in each sub-map of the N sub-maps and a transposition matrix of the matrix.

For each sub-map, the sum of the product of an eigenvector of each grid in a sub-map and the inverse vector of the eigenvector thereof is determined; eigenvalue decomposition is performed on the sum of each grid in the sub-map to obtain two target eigenvalues; a matrix is constructed according to the two target eigenvalues, wherein a first column in the matrix is a eigenvector corresponding to a maximum target eigenvalue, a second column is a eigenvector corresponding to a second maximum target eigenvalue, a third column is a cross multiplication of the first column and the second column, and any two columns of the matrix are orthogonal, which meets a characteristic of a rotation matrix; and the target eigenvector of each grid in the sub-map is obtained according to the eigenvector of each grid in the sub-map and the transposition matrix of the matrix.

In order to make the loop detection based on lidar map have rotation invariance, the sub-map needs to be rotated, so that the most characteristic directions are distributed in the X-axis and the next most characteristic directions are distributed in the Y-axis. The eigenvector of each grid is cd, σ is recorded as the sum of cd*cd' in all grids in the sub-map, and eigenvalue decomposition is performed on σ, constructing a matrix, where the first column of the matrix is an eigenvector corresponding to the maximum target eigenvalue, the second column of the matrix is an eigenvector corresponding to the second maximum target eigenvalue, and the third column of the matrix is the cross multiplication of the first column and the second column, so that any two columns of the matrix are orthogonal, which meets a characteristic of a rotation matrix; and the transposition of the matrix is recorded as R, the eigenvector of each grid is updated, and the obtained target eigenvector is R*cd after updating.

Through applying the embodiment, the lidar map-based loop detection has rotation invariance, the robustness of the loop detection algorithm is improved, and the accuracy of loop detection is improved.

In an embodiment of the present disclosure, on the basis of implementing any one of the above-mentioned methods, constructing histograms of a sub-map according to a target eigenvector of each grid in the sub-map includes: representing the target eigenvector of each grid of the sub-map as a grid point represented by spherical coordinates (r, θ, φ), wherein r represents the distance from the grid point to the origin point, θ represents the zenith angle between the line connecting the origin point θ to the grid point and the positive Z-axis, and φ represents the azimuth angle between the line connecting the origin point to the grid point in the XY plane and the positive X-axis. N discrete coordinate values are respectively arranged on the horizontal axis and the vertical axis, wherein N is a positive integer. Each point of the histogram is initialized to be 0, the θ value and the φ value of each grid are traversed in the sub-map, and 1 is added to the value of the $(\theta/(180/P), \varphi/(180/P))$ point until the traversal is finished to obtain the histogram of the sub-map.

The number of discrete coordinate values can be set or adjusted according to design requirements such as accuracy requirements or speed requirements.

Illustratively, P=60, the θ value and the φ value of each grid are traversed in the sub-map, and 1 is added to the value of the $(\theta/3, \varphi/3)$ point.

Again illustratively, P=30, the θ value and the φ value of each grid are traversed in the sub-map, and 1 is added to the value of the $(\theta/6, \varphi/6)$ point.

Through applying the above embodiment, a three-dimensional sub-map is reduced into a two-dimensional histogram, the dimension of the characteristic is greatly reduced, the workload of subsequent matching work is reduced, and therefore the effectiveness of a lidar map-based loop detection can be improved.

In an embodiment of the present disclosure, on the basis of implementing any one of the above-mentioned methods, if the similarity of the histograms of two sub-maps is greater than a preset threshold value, it is determined that a loop relation exists between the two sub-maps, including:

It is recorded that the first histogram of the first sub-map is HI, and the second histogram of the second sub-map is H2. If H1 and H2 satisfy the following relation:

$$\frac{\sum_{i,j}(H1(i,j)-\overline{H1})*(H2(i,j)-\overline{H2})}{\sqrt[2]{\sum_{i,j}(H1(i,j)-\overline{H1})^2*\sum_{i,j}(H2(i,j)-\overline{H2})^2}}$$ is larger

than a preset threshold, it is determined that a loop relation exists between the first sub-map and the second sub-map, wherein

i represents $\theta/(180/P)$, j represents $\varphi/(180/P)$, $H1(i, j)$ represents a value corresponding to a point (i,j) of the first histogram, and $\overline{H1}$ represents an average value of values of all points (i,j) in the first histogram. $H2(i,j)$ represents a value corresponding to a point $(i,j)$ of the second histogram, and $\overline{H2}$ represents an average value of values of all points $(i,j)$ in the second histogram.

Therefore, a loop detection based on lidar data can be realized, loop detection is carried out by using laser data instead of image data, and the robustness to interference performance of factors such as illumination, visual angle and the like is stronger.

The lidar map-based loop detection method provided by the disclosure can be used for items such as map construction or loop detection. Illustratively, the actor of the method may be an electronic device, which may be a variety of map building devices or loop detection devices.

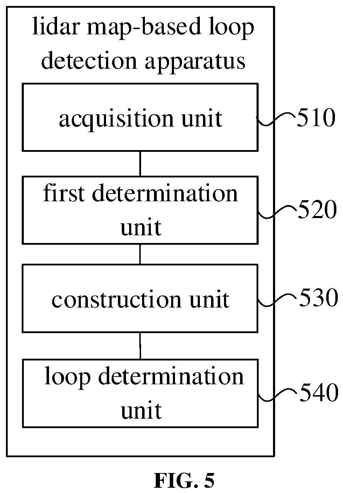

As for implementing the above-mentioned methods, the present disclosure also provides a lidar map-based loop detection apparatus. FIG. 5 shows a schematic diagram of a lidar map-based loop detection apparatus. As shown in FIG. 5, the apparatus includes:

an acquisition unit 510 for acquiring an eigenvector of each grid in each sub-map of N sub-maps of the lidar map, wherein the eigenvector is used for representing a characteristic direction of the grid, and N is an integer greater than or equal to 2;
a first determination unit 520 for determining a target eigenvector of each grid in each sub-map of the N sub-maps according to the eigenvector of each grid in each sub-map of the N sub-maps;
a construction unit 530 for constructing histograms of the N sub-maps according to the target eigenvector of each grid in each sub-map of the N sub-maps; and
a loop determination unit 540 for determining that a loop relation exists between two target sub-maps in the N sub-maps, in case that a similarity of histograms of the two target sub-maps is greater than a preset threshold value.

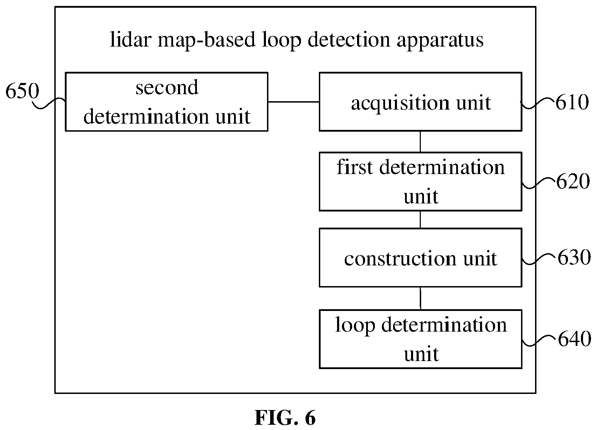

In some implementations, as shown in FIG. 6, in addition to an acquisition unit 610, a first determination unit 620, a construction unit 630, and a loop detection unit 640, which are identical or similar to the acquisition unit 510, the first determination unit 520, the construction unit 530, and the loop detection unit 540, the apparatus may further include:
a second determination unit 650 for determining, according to a point-cloud point set corresponding to each grid in each sub-map of the N sub-maps, a covariance between an average coordinate of point-cloud points and a coordinate of each point-cloud point in the point-cloud point set of each grid in each sub-map of the N sub-maps; and determining a covariance matrix of each grid in each sub-map of the N sub-maps according to the covariance between the average coordinate of the point-cloud points and the coordinate of each point-cloud point in the point-cloud point set corresponding to each grid in each sub-map of the N sub-maps.

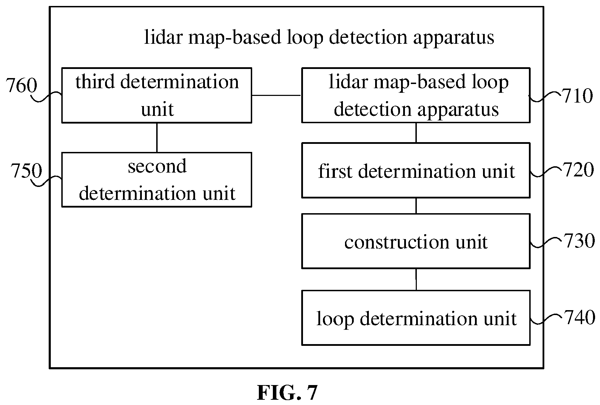

In some implementations, as shown in FIG. 7, in addition to an acquisition unit 710, a first determination unit 720, a construction unit 730, a loop detection unit 740, and a second determination unit 750, which are identical or similar to the acquisition unit 510, the first determination unit 520, the construction unit 530, the loop detection unit 540, and the second determination unit 640, the apparatus may further include:

a third determination unit 760 for obtaining three eigenvalues of each grid in each sub-map of the N sub-maps by performing eigenvalue decomposition on the covariance matrix of each grid in each sub-map of the N sub-maps; determining a characteristic of each grid in each sub-map of the N sub-maps according to a size relation of the three eigenvalues of each grid in each sub-map of the N sub-maps; and determining the eigenvector of each grid in each sub-map of the N sub-maps according to the characteristic of each grid in each sub-map of the N sub-maps.

In some implementations, the third determination unit 760 is further configured for: selecting, respectively, a target grid participating in loop detection in each sub-map of the N sub-maps according to the characteristic of each grid in each sub-map of the N sub-maps; and determining, respectively, an eigenvector of each target grid in each sub-map of the N sub-maps according to a characteristic of each target grid in each sub-map of the N sub-maps.

In some implementations, the first determination unit 720 is further configured for: determining a sum of a product of the eigenvector and an inverse vector of the eigenvector of each grid in each sub-map of the N sub-maps; obtaining two target eigenvalues of each grid in each sub-map of the N sub-maps by performing eigenvalue decomposition on the sum of each grid in each sub-map of the N sub-maps; constructing a matrix according to the two target eigenvalues of each grid in each sub-map of the N sub-maps, wherein a first column of the matrix is an eigenvector corresponding to a maximum target eigenvalue, a second column is an eigenvector corresponding to a second maximum target eigenvalue, a third column is a cross multiplication of the first column and the second column, and any two columns of the matrix are orthogonal, which meets a characteristic of a rotation matrix; and obtaining the target eigenvector of each grid in each sub-map of the N sub-maps according to the eigenvector of each grid in each sub-map of the N sub-maps and a transposition matrix of the matrix.

According to the lidar map-based loop detection apparatus, characteristics of laser data are extracted from a lidar sub-map, and loop detection is carried out by utilizing the characteristics of the lidar data. Compared with a mode of loop detection by utilizing a track, robustness is stronger, detection success rate is higher, accuracy and timeliness of loop detection can be improved, and reliability of a loop detection result is greatly improved.

According to embodiments of the present disclosure, the present disclosure further provides an electronic device, a readable storage medium, and a computer program product.

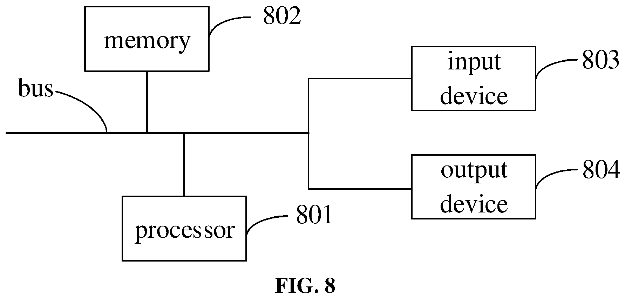

FIG. 8 is a block diagram of electronic device used to implement the lidar map-based loop detection method of the present disclosure. The electronic device is intended to represent various forms of digital computers, such as laptop computers, desktop computers, workbenches, personal digital assistants, servers, blade servers, mainframe computers, and other suitable computers. Electronic apparatuses may also represent various forms of mobile devices, such as personal digital assistants, cellular phones, smart phones, wearable devices, and other similar computing devices. The components shown herein, their connections and relationships, and their functions are merely examples, and are not intended to limit the implementation of the present disclosure described and/or claimed herein.

As shown in FIG. 8, the electronic device includes: one or more processors 801, a memory 802, and interfaces for connecting various components, including high-speed interface and low-speed interface. The various components are interconnected using different buses and may be installed on a common motherboard or otherwise as desired. The processor may process instructions for execution within a classical computer, including instructions stored in the memory or on the memory to display graphical information of the GUI on an external input/output device, (such as display equipment coupled to the interface). In other implementation modes, multiple processors and/or multiple buses may be used with multiple memories and multiple memories, if desired. Also, multiple classical computers may be connected, each piece of equipment providing some of the necessary operations (e.g., as an array of a server, one set of blade servers, or a multiprocessor system). An example of one processor 801 is shown in FIG. 8.

The memory 802 is a non-transitory computer-readable storage medium provided herein. Where the memory stores an instruction executable by at least one processor to cause the at least one processor to execute the simulation method in quantum control provided herein. The non-transitory computer-readable storage medium of the present disclosure stores computer instructions for causing a computer to execute the simulation method in quantum control provided herein.

The memory 802, s a non- transitory computer-readable storage medium, can be used for storing non-transitory software programs, non- transitory computer-executable programs and modules, and program instructions/modules corresponding to the lidar map-based loop detection method in embodiments of the present disclosure (for example, the acquisition unit 510, the first determination unit 520, the construction unit 530 and the loop determination unit 540 shown in FIG. 5, a second determination unit 550 shown in FIG. 6, and a third determination unit 560 shown in FIG. 7). The processor 801 executes various functional applications of the server and data processing by running non-transitory software programs, instructions and modules stored in the memory 802, i.e., implementing the lidar map-based loop detection method in above-described method embodiments.

The memory 1102 may include a storage program area and a storage data area. The storage program area may store an operating system and an application program required for at least one function. The storage data area may store data or the like created according to the usage of the electronic device of the lidar map-based loop detection method. In addition, the memory 802 may include high-speed random-access memory, and may also include non-transitory memory, such as at least one disk storage component, flash memory component, or other non-transitory solid state storage components. In some embodiments, the memory 802 may optionally include a memory remotely located relative to processor 801, and such remote memories may be connected via a network to the electronic device of the lidar map-based loop detection method. Examples of such networks include, but are not limited to, the Internet, intranets, local area networks, mobile communication networks, and combinations thereof.

The electronic device of the lidar map-based loop detection method may further include an input device 803 and an output device 804. The processor 801, the memory 802, the input device 803, and the output device 804 may be connected by a bus or other means, exemplified by a bus connection in FIG. 8.

The input device 803 may receive input numeric or character information and generate key signal inputs related to user settings and functional controls of the sensed electronic equipment, such as input devices of touch screens, keypads, mice, track pads, touch pads, pointing sticks, one or more mouse buttons, track balls, joysticks, etc. The output device 1104 may include display devices, auxiliary lighting devices (e.g., LEDs), tactile feedback devices (e.g., vibration motors), and the like. The display device may include, but is not limited to, a liquid crystal display (LCD), a light emitting diode (LED) display, and a plasma display. In some embodiments, the display device may be a touch screen.

The present disclosure also provides an electronic device according to embodiments of the present disclosure. The device may include:

at least one processor; and
a storage device for storing one or more programs which, when executed by one or more processors, causes the one or more processors to implement the lidar map-based loop detection method in the above-described method embodiments.

Among other things, reference may be made to the above-mentioned description of the processor and memory in embodiments of the electronic device for functions and implementations of the processor and memory of the electronic device.

Various embodiments of the systems and techniques described herein may be implemented in digital electronic circuit systems, integrated circuit systems, disclosure specific ASICs (disclosure specific integrated circuits), computer hardware, firmware, software, and/or combinations thereof. These various embodiments may be embodied in one or more computer programs, which can be executed and/or interpreted on a programmable system including at least one programmable processor, which can be a dedicated or general-purpose programmable processor, and can receive data and instructions from, and transmit data and instructions to, a memory system, at least one input device, and at least one output device, and the at least one output device.

These computing programs (also referred to as programs, software, software disclosures, or code) include machine instructions of a programmable processor, and may be implemented using high-level procedural and/or object-oriented programming languages, and/or assembly/machine languages. As used herein, the terms "machine-readable medium" and "computer-readable medium" refer to any computer program product, equipment, and/or device (e.g., magnetic disk, optical disk, memory, programmable logic device (PLD)) for providing machine instructions and/or data to a programmable processor, including a machine-readable medium that receives machine instructions as machine-readable signals. The term "machine-readable signal" refers to any signal used to provide machine instructions and/or data to a programmable processor.

To provide interaction with a user, the systems and techniques described herein may be implemented on a computer having: a display device (e.g., a CRT (cathode ray tube) or LCD (liquid crystal display) monitor) for displaying information to a user; and a keyboard and a pointing device (e.g., a mouse or a trackball) through which a user can provide input to the computer. Other types of devices may also be used to provide interaction with a user. For example, the feedback provided to the user may be any form of sensory feedback (e.g., visual feedback, auditory feedback, or tactile feedback); and input from the user may be received in any form, including acoustic input, voice input, or tactile input.

The systems and techniques described herein may be implemented in a computing system that includes a background component (e.g., as a data server), or a computing system that includes a middleware component (e.g., an disclosure server), or a computing system that includes a front-end component (e.g., a user computer having a graphical user interface or a web browser, wherein a user may interact with embodiments of the systems and techniques described herein through the graphical user interface or the web browser), or in a computing system that includes any combination of such background components, middleware components, or front-end components. The components of the system may be interconnected by any form or medium of digital data communication (e.g., a communication network). Examples of communication networks include: local Area Networks (LANs), Wide Area Networks (WANs), and the Internet.

A computer system may include a client and a server. The client and server are typically remote from each other and typically interact through a communication network. The relation of the client and the server is generated by computer programs running on respective computers and having a client-server relation with each other. The server can be a cloud server, also called a cloud computing server or a cloud host, is a host product in a cloud computing service system, and solves the defects of high management difficulty and weak business expansibility in the traditional physical host and virtual private server (VPS) service.

According to the technical solution of the embodiment disclosed by the disclosure, the characteristics of laser data are extracted from a lidar sub-map, and the lidar data characteristics are used for loop detection. Compared with a mode of loop detection by using a track, the robustness is stronger, the detection success rate is higher, the accuracy and timeliness of loop detection can be improved, and the reliability of a loop detection result is greatly improved.

It should be understood that the various forms of flow, reordering, adding or removing steps shown above may be used. For example, the steps recited in the present disclosure may be performed in parallel or sequentially or may be performed in a different order, so long as the desired results of the technical solutions disclosed in the present disclosure can be achieved, and no limitation is made herein.

The above-mentioned embodiments are not to be construed as limiting the scope of the present disclosure. It will be apparent to those skilled in the art that various modifications, combinations, sub-combinations and substitutions are possible, depending on design requirements and other factors. Any modifications, equivalents, and improvements within the spirit and principles of this disclosure are intended to be included within the scope of this disclosure.

**Claims**

1. A lidar map-based loop detection method, comprising:

   acquiring (S11; S21; S31) an eigenvector of each grid in each sub-map of N sub-maps of the lidar map, wherein the eigenvector is used for representing a characteristic direction of the grid, and N is an integer greater than or equal to 2;
   determining (S12; S42) a target eigenvector of each grid in each sub-map of the N sub-maps according to the eigenvector of each grid in each sub-map of the N sub-maps;
   constructing (S13) histograms of the N sub-maps according to the target eigenvector of each grid in each sub-map of the N sub-maps; and

   determining (S14; S24) that a loop relation exists between two target sub-maps in the N sub-maps, in case that a similarity of histograms of the two target sub-maps is greater than a preset threshold value.

2. The lidar map-based loop detection method according to claim 1, further comprising:

   determining (S25), according to a point-cloud point set corresponding to each grid in each sub-map of the N sub-maps, a covariance between an average coordinate of point-cloud points and a coordinate of each point-cloud point in the point-cloud point set of each grid in each sub-map of the N sub-maps; and
   determining (S26) a covariance matrix of each grid in each sub-map of the N sub-maps according to the covariance between the average coordinate of the point-cloud points and the coordinate of each point-cloud point in the point-cloud point set corresponding to each grid in each sub-map of the N sub-maps.

3. The lidar map-based loop detection method according to claim 2, further comprising:

   obtaining (S31a) three eigenvalues of each grid in each sub-map of the N sub-maps by performing eigenvalue decomposition on the covariance matrix of each grid in each sub-map of the N sub-maps;
   determining (S31b) a characteristic of each grid in each sub-map of the N sub-maps according to a size relation of the three eigenvalues of each grid in each sub-map of the N sub-maps; and
   determining (S31c) the eigenvector of each grid in each sub-map of the N sub-maps according to the characteristic of each grid in each sub-map of the N sub-maps.

4. The lidar map-based loop detection method according to claim 3, before determining (S31c) the eigenvector of each grid in each sub-map of the N sub-maps according to the characteristic of each grid in each sub-map of the N sub-maps, the method further comprises:

   selecting, respectively, a target grid participating in loop detection in each sub-map of the N sub-maps according to the characteristic of each grid in each sub-map of the N sub-maps; and
   determining the eigenvector of each grid in each sub-map of the N sub-maps according to the characteristic of each grid in each sub-map of the N sub-maps further comprises:
   determining an eigenvector of each target grid in each sub-map of the N sub-maps according to a characteristic of each target grid in each sub-map of the N sub-maps.

5. The lidar map-based loop detection method according to any one of claims 1 to 4, wherein determining (S42; S12) the target eigenvector of each grid in each sub-map of the N sub-maps according to the eigenvector of each grid in each sub-map of the N sub-maps comprises:

   determining (S42a) a sum of a product of the eigenvector and an inverse vector of the eigenvector of each grid in each sub-map of the N sub-maps;
   obtaining (S42b) two target eigenvalues of each grid in each sub-map of the N sub-maps by performing eigenvalue decomposition on the sum of each grid in each sub-map of the N sub-maps;
   constructing (S42c) a matrix according to the two target eigenvalues of each grid in each sub-map of the N sub-maps, wherein a first column of the matrix is an eigenvector corresponding to a maximum target eigenvalue, a second column is an eigenvector corresponding to a second maximum target eigenvalue, a third column is a cross multiplication of the first column and the second column, and any two columns of the matrix are orthogonal, which meets a characteristic of a rotation matrix; and
   obtaining (S42d) the target eigenvector of each grid in each sub-map of the N sub-maps according to the eigenvector of each grid in each sub-map of the N sub-maps and a transposition matrix of the matrix.

6. A lidar map-based loop detection apparatus, comprising:

   an acquisition unit (510) for acquiring an eigenvector of each grid in each sub-map of N sub-maps of the lidar map, wherein the eigenvector is used for representing a characteristic direction of the grid, and N is an integer greater than or equal to 2;
   a first determination unit (520) for determining a target eigenvector of each grid in each sub-map of the N sub-maps according to the eigenvector of each grid in each sub-map of the N sub-maps;
   a construction unit (530) for constructing histograms of the N sub-maps according to the target eigenvector of each grid in each sub-map of the N sub-maps; and
   a loop determination unit (540) for determining that a loop relation exists between two target sub-maps in the N sub-maps, in case that a similarity of histograms of the two target sub-maps is greater than a preset threshold value.

7. The lidar map-based loop detection apparatus according to claim 6, further comprising:
   a second determination unit (650) for determining, according to a point-cloud point set corresponding to each grid in each sub-map of the N sub-maps, a covariance between an average coordinate of point-cloud points and a coordinate of each point-cloud point in the point-cloud point set of each grid in each sub-map of the N sub-maps; and determining a covariance matrix of each grid in each sub-map of the N sub-maps according to the covariance between the average coordinate of the point-cloud points and the coordinate of each point-cloud point in the point-cloud point set corresponding to each grid in each sub-map of the N sub-maps.

8. The lidar map-based loop detection apparatus according to claim 7, further comprising:
   a third determination unit (760) for obtaining three eigenvalues of each grid in each sub-map of the N sub-maps by performing eigenvalue decomposition on the covariance matrix of each grid in each sub-map of the N sub-maps; determining a characteristic of each grid in each sub-map of the N sub-maps according to a size relation of the three eigenvalues of each grid in each sub-map of the N sub-maps; and determining the eigenvector of each grid in each sub-map of the N sub-maps according to the characteristic of each grid in each sub-map of the N sub-maps.

9. The lidar map-based loop detection apparatus according to claim 8, wherein the third determination unit (760) is further configured for: selecting, respectively, a target grid participating in loop detection in each sub-map of the N sub-maps according to the characteristic of each grid in each sub-map of the N sub-maps; and determining, respectively, an eigenvector of each target grid in each sub-map of the N sub-maps according to a characteristic of each target grid in each sub-map of the N sub-maps.

10. The lidar map-based loop detection apparatus according to any one of claims 6 to 9, wherein the first determination unit (520; 620; 720) is further configured for: determining a sum of a product of the eigenvector and an inverse vector of the eigenvector of each grid in each sub-map of the N sub-maps; obtaining two target eigenvalues of each grid in each sub-map of the N sub-maps by performing eigenvalue decomposition on the sum of each grid in each sub-map of the N sub-maps; constructing a matrix according to the two target eigenvalues of each grid in each sub-map of the N sub-maps, wherein a first column of the matrix is an eigenvector corresponding to a maximum target eigenvalue, a second column is an eigenvector corresponding to a second maximum target eigenvalue, a third column is a cross multiplication of the first column and the second column, and any two columns of the matrix are orthogonal, which meets a characteristic of a rotation matrix; and obtaining the target eigenvector of each grid in each sub-map of the N sub-maps according to the eigenvector of each grid in each sub-map of the N sub-maps and a transposition matrix of the matrix.

11. A non-transitory computer-readable storage medium storing computer instructions, wherein the computer instructions, when executed by a computer, cause the computer to perform the method of any of claims 1 to 5.

12. A computer program product comprising instructions which, when the program is executed by a computer, cause the computer to perform the method of any one of claims 1 to 5.

13. A computer program product comprising a computer program which, when executed by a processor, implements the method according to any one of claims 1 to 5.

S11

acquiring an eigenvector of each grid in each sub-map of N sub-maps of the lidar map, wherein the eigenvector is used for representing a characteristic direction of the grid, and N is an integer greater than or equal to 2

S12

determining a target eigenvector of each grid in each sub-map of the N sub-maps according to the eigenvector of each grid in each sub-map of the N sub-maps

S13

constructing histograms of the N sub-maps according to the target eigenvector of each grid in each sub-map of the N sub-maps

S14

determining that a loop relation exists between two target sub-maps in the N sub-maps, in case that a similarity of histograms of the two target sub-maps is greater than a preset threshold value

**FIG. 1**

S25

determining, according to a point-cloud point set corresponding to each grid in each sub-map of the N sub-maps, a covariance between an average coordinate of point-cloud points and a coordinate of each point-cloud point in the point-cloud point set of each grid in each sub-map of the N sub-maps

S26

determining a covariance matrix of each grid in each sub-map of the N sub-maps according to the covariance between the average coordinate of the point-cloud points and the coordinate of each point-cloud point in the point-cloud point set corresponding to each grid in each sub-map of the N sub-maps

S21

acquiring an eigenvector of each grid in each sub-map of N sub-maps of the lidar map, wherein the eigenvector is used for representing a characteristic direction of the grid, and N is an integer greater than or equal to 2

S22

determining a target eigenvector of each grid in each sub-map of the N sub-maps according to the eigenvector of each grid in each sub-map of the N sub-maps

S23

constructing histograms of the N sub-maps according to the target eigenvector of each grid in each sub-map of the N sub-maps

S24

determining that a loop relation exists between two target sub-maps in the N sub-maps, in case that a similarity of histograms of the two target sub-maps is greater than a preset threshold value

**FIG. 2**

S31a

obtaining three eigenvalues of each grid in each sub-map of the N sub-maps by performing eigenvalue decomposition on the covariance matrix of each grid in each sub-map of the N sub-maps

S31b

determining a characteristic of each grid in each sub-map of the N sub-maps according to a size relation of the three eigenvalues of each grid in each sub-map of the N sub-maps

S31c

determining the eigenvector of each grid in each sub-map of the N sub-maps according to the characteristic of each grid in each sub-map of the N sub-maps

**FIG. 3**

S42a

determining a sum of a product of the eigenvector and an inverse vector of the eigenvector of each grid in each sub-map of the N sub-maps

S42b

obtaining two target eigenvalues of each grid in each sub-map of the N sub-maps by performing eigenvalue decomposition on the sum of each grid in each sub-map of the N sub-maps

S42c

constructing a matrix according to the two target eigenvalues of each grid in each sub-map of the N sub-maps

S42d

obtaining the target eigenvector of each grid in each sub-map of the N sub-maps according to the eigenvector of each grid in each sub-map of the N sub-maps and a transposition matrix of the matrix

**FIG. 4**

lidar map-based loop
detection apparatus

| acquisition unit | 510 |

| first determination unit | 520 |

| construction unit | 530 |

| loop determination unit | 540 |

**FIG. 5**

lidar map-based loop detection apparatus

650 — second determination unit

acquisition unit — 610

first determination unit — 620

construction unit — 630

loop determination unit — 640

**FIG. 6**

lidar map-based loop detection apparatus

760 — third determination unit

lidar map-based loop detection apparatus — 710

750 — second determination unit

first determination unit — 720

construction unit — 730

loop determination unit — 740

**FIG. 7**

802

memory

803

input
device

bus

804

output
device

801

processor

**FIG. 8**